# FASCICULE DE BREVET EUROPEEN

(11) **EP 1 428 740 B1**
(45) Date de publication et mention de la délivrance du brevet: **25.07.2007**
(21) Numéro de dépôt: 03026421.2
(22) Date de dépôt: 19.11.2003
(51) Int. Cl.: B62D 6/00, B62D 5/04

(54) **Système de direction d'un véhicule comportant un mode de fonctionnement dégradé en cas de panne d'un actionneur de braquage de roue**
Fahrzeuglenksystem mit einem Notbetriebsmodus im Falle eines Ausfalls eines Radlenk-Aktuators
Vehicle steering system with an emergency operating mode in the event of a failure of a wheel steering actuator

(30) Priorité: 11.12.2002 FR 0215880
(43) Date de publication de la demande: 16.06.2004
(73) Titulaire: MICHELIN Recherche et Technique S.A., 1763 Granges-Paccot (CH)
(72) Inventeur: Laurent, Daniel, 1723 Marly (CH)
(74) Mandataire: Bauvir, Jacques

(56) Documents cités:
- WO-A-01/72571
- US-A- 6 015 193
- US-B1- 6 279 674

## Description

La présente invention concerne les véhicules automobiles routiers pourvus d'un système de direction dont toutes les roues directrices sont commandées en braquage par un actionneur qui lui est propre. Par exemple, parmi les systèmes de direction électrique connus, il en existe qui sont dépourvus de liaison mécanique entre les roues directrices et le volant et sont également dépourvus de liaison mécanique pour synchroniser le braquage entre roues directrices elles-mêmes.

On connaît des systèmes de direction électrique comportant un actionneur électrique individuel par roue directrice, le système de direction étant capable de braquer sélectivement chacune des roues directrices d'un angle qui lui est spécifique, la cohérence des braquages étant assurée par l'électronique de pilotage. On consultera, par exemple, le brevet US6015193A, correspondant au préambule de la revendication 1. L'actionneur électrique de chaque roue a pour fonction d'imposer à la roue considérée l'angle de braquage choisi par l'électronique de pilotage. La commande de direction à la disposition du conducteur du véhicule peut être un volant traditionnel ou une manette du genre manche à balai (joystick) ou tout autre dispositif convenable. Les ordres imprimés par le conducteur du véhicule sur son dispositif de commande sont envoyés à l'électronique de pilotage chargée de programmes adéquats afin de pouvoir piloter le ou les actionneurs de façon appropriée.

Un des avantages de cette technologie est qu'elle se marie de façon idéale avec l'électronique et l'informatique, dont les progrès permettent des asservissements de plus en plus sophistiqués, ce qui fait qu'il est possible de placer le braquage des roues non seulement sous le contrôle de la commande manuelle mais aussi sous le contrôle d'un système de sécurité. Ainsi par exemple, on peut imprimer aux roues directrices un angle qui tient non seulement compte de la commande du conducteur du véhicule, mais qui tient également compte des paramètres dynamiques observés sur le véhicule.

Grâce à la direction électrique, il s'ouvre un champ de possibilités beaucoup plus large pour agir sur la stabilité de trajectoire d'un véhicule. Par exemple, alors qu'à l'heure actuelle un système automatique de correction de la trajectoire du véhicule imprime des moments de lacets correctifs au moyen des freins d'une ou plusieurs roue, le passage à des commandes électriques des différentes fonctions sur un véhicule permettrait d'agir sur l'angle de braquage des différentes roues directrices du véhicule pour en corriger la trajectoire.

Mais le système de direction d'un véhicule est une fonction essentielle et vitale pour la sécurité, comme les freins. Dès lors, pour pouvoir se substituer aux directions mécaniques, assistées ou non, quasi universellement adoptées à l'heure actuelle sur tous les véhicules routiers, il est essentiel qu'un système de direction électrique soit extrêmement sûr. C'est pourquoi on conçoit généralement des systèmes électriques redondants dans le but d'assurer un fonctionnement permanent du système même si l'un de ses composants est défaillant. C'est la notion de système tolérant aux pannes. Ainsi, par exemple, les parties électriques des actionneurs de roues sont de préférence redondantes. On consultera à ce sujet par exemple la demande de brevet US 2003/0098197 donnant un exemple de système redondant pour la commande d'une direction électrique.

Cependant, on en peut jamais exclure totalement la survenance d'une défaillance d'un composant essentiel. Par exemple, un actionneur électrique de roue peut rester bloqué dans une certaine position angulaire. Ou encore il peut tomber en panne électrique de telle façon qu'il prend une position angulaire indifférente, situation dans laquelle il est incapable de transmettre des efforts de braquage (ou de maintien en ligne droite).

L'objectif de l'invention est donc de, en cas de panne totale d'un actionneur électrique sur l'une des roues directrices, pouvoir maintenir autant que possible le contrôle de la trajectoire du véhicule selon le souhait de son conducteur, au moins afin de pouvoir ranger le véhicule là où ses passagers sont en sécurité.

L'invention propose un système de direction d'un véhicule dont toutes les roues directrices sont commandées en braquage par un actionneur qui lui est propre, le système comportant au moins un levier de commande de direction à la disposition du conducteur pour agir sur la trajectoire du véhicule, chaque roue directrice étant pourvue de moyens de mesure permettant d'estimer l'angle de braquage de ladite roue directrice, le système comportant :
- un contrôleur ayant au moins un mode de fonctionnement normal dans lequel le contrôleur détermine, pour chaque roue directrice, une consigne d'angle de braquage normal au moins en fonction de l'action du conducteur sur son levier de commande et ayant au moins un mode de fonctionnement dégradé activé en cas de panne d'un actionneur de roue ;
- des moyens de détection de panne d'un actionneur de roue activant ledit mode de fonctionnement dégradé et transmettant au contrôleur la localisation sur le véhicule de la roue dont l'actionneur est en panne ;
caractérisé en ce que, en mode de fonctionnement dégradé activé sur panne d'un actionneur de roue donné, le contrôleur détermine au moins une consigne braquage de compensation pour une autre roue directrice.

Bien entendu, les directions à actionneur électrique, répondant par ailleurs aux caractéristiques indiquées en préambule ci-dessus, offrent un champ d'application privilégié de l'invention. Cependant, ce n'est pas limitatif, des systèmes de direction hydrauliques pouvant aussi être construits selon ce que propose l'invention.

Un actionneur de roue a pour effet, par le contrôle de l'angle de braquage de la roue directrice à laquelle il est relié, d'imprimer un certain niveau de couple de lacet au véhicule. Lorsqu'un actionneur de roue est défaillant, selon l'invention, on imprime ce niveau de couple de lacet en agissant sur le braquage d'une autre roue, éventuellement sur plusieurs autres roues, et en outre éventuellement sur le couple, moteur et/ou freineur sur l'une ou l'autre des roues, y compris éventuellement sur plusieurs, y compris éventuellement sur la roue dont l'actionneur de direction est en panne. Le contrôleur, par lui-même ou en dialogue avec un module de contrôle de la stabilité du véhicule, détermine une ou plusieurs consignes de braquage de compensation appropriées. Par exemple, la consigne de braquage de compensation concerne la roue directrice opposée sur l'essieu ayant une roue directrice en panne.

On sait que la poussée de dérive d'un pneu dépend, à l'ordre 1, de l'angle de dérive de ce pneu. Dans le contexte de la présente invention, par l'expression « pneu », on couvre indifféremment un pneu gonflé ou une roue élastique non pneumatique ou tout objet hybride des deux concepts. On sait aussi que la stabilité de la trajectoire d'un véhicule dépend principalement des poussées transversales qui se développent sur chacun de ses essieux. Dans le cas d'un véhicule de tourisme à quatre roues, c'est-à-dire à deux essieux, selon que la poussée transversale de l'un des essieux se modifie par rapport à la poussée transversale de l'autre essieu, le véhicule va prendre un angle de lacet. Que ce soit pour maintenir le véhicule en ligne droite ou pour l'inscrire dans un virage, que ce soit pour le maintenir sur sa trajectoire malgré des perturbations extérieures comme un vent transversal, par le braquage des roues, il s'agit en définitive toujours de faire se développer sur chacun des essieux avant et arrière de ce véhicule des poussées transversales correspondant aux actions du pilote, afin d'imprimer au véhicule un certain niveau de couple de lacet.

Sur chaque essieu, la poussée transversale totale est l'addition des poussées transversales développées par chacun des pneus. Si l'un des actionneurs électriques est en panne, on ne peut plus compter sur le pneu de la roue directrice considérée pour développer une poussée transversale choisie. Et l'équilibre dynamique du véhicule est d'autant plus important pour la sécurité que la vitesse de déplacement du véhicule est élevée. Il est à noter que, en déplacement à des vitesses soutenues, les angles de braquage des roues sont toujours assez faibles.

L'invention propose, en cas de panne survenant sur l'un des actionneurs de roue directrice d'un essieu, de compenser en modifiant dans le sens voulu l'angle de braquage sur une autre roue directrice, par exemple la roue directrice opposée du même essieu. En complément, l'invention propose aussi d'agir sur le mouvement de lacet en cas de panne survenant sur l'un des actionneurs de roue directrice en imposant des couples aux roues différents sur les roues d'au moins un essieu, comme bien connu en soi dans les systèmes de contrôle de la stabilité des véhicules connus sous l'appellation ESP.

Bien entendu, ce qui a été proposé ci-dessus n'offre qu'un mode de fonctionnement dégradé à ne faire intervenir qu'en dernier recours, lorsque le système qui comportera de préférence des redondances dans ses voies de commande est devenu incapable de transmettre à une des roues directrices des angles de braquage correspondant soit à la volonté du pilote, soit à ce que calcule un système de gestion électronique de la trajectoire du véhicule.

La gestion de mode dégradé proposée par l'invention apporte une solution qui permet de maintenir l'équilibre dynamique du véhicule, bien entendu seulement dans les limites physiquement possibles pour ce véhicule. Ainsi, tant que l'on n'a pas atteint la saturation de la poussée de dérive du pneu de la roue directrice pour laquelle l'actionneur électrique n'est pas en panne, on peut modifier l'angle de braquage de ladite roue directrice de telle façon que la poussée transversale que va développer ladite roue directrice tende à procurer une poussée transversale globale de l'essieu considéré qui correspond à ce qui est nécessaire pour assurer l'équilibre du véhicule, c'est à dire à la somme des poussées transversales qu'auraient développées les deux roues directrices de l'essieu en mode de fonctionnement normal.

Bien entendu, sur la roue directrice en panne, il se peut que la poussée transversale correspondant à l'angle de braquage de cette roue soit à l'opposé de ce que l'on souhaite comme poussée transversale sur l'essieu considéré. Bien entendu, l'adoption sur la roue fonctionnelle d'une compensation comme expliqué ici peut s'accompagner d'un effort de freinage longitudinal. Cependant, l'objectif de ce mode de fonctionnement dégradé n'est pas de procurer au véhicule les mêmes capacités de déplacement, mais simplement de pouvoir continuer à le guider même en cas de défaillance grave d'un élément important, de façon à pouvoir le ralentir ou l'arrêter dans les conditions de sécurité les meilleures possibles compte tenu de la situation du véhicule.

L'invention est illustrée au moyen des deux figures jointes sur lesquelles :
- la figure 1 montre un schéma d'implantation d'un système de direction électrique sur un véhicule à quatre roues dans lequel seul l'essieu avant est directeur ;
- la figure 2 montre la situation de ce véhicule en fonctionnement en mode dégradé.

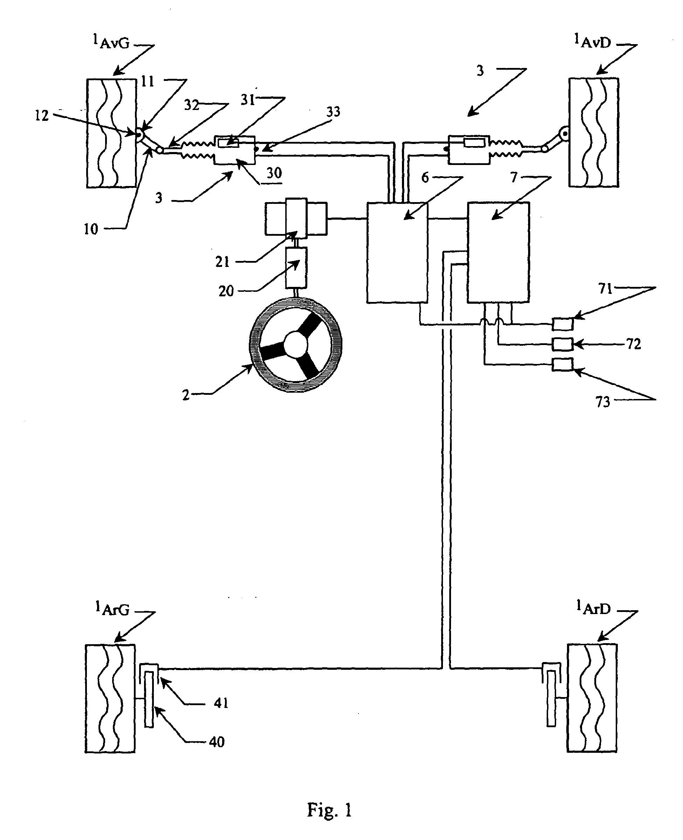

A la figure 1, on a schématisé un véhicule à quatre roues 1_{AvG}, 1_{AvD}, 1_{ArG} et 1_{ArD}, dont l'essieu avant comporte deux roues directrices. Les roues sont notées 1_{AvG} pour la roue avant gauche, 1_{AvD} pour la roue avant droite, 1_{ArG} pour la roue arrière gauche et 1_{ArD} pour la roue arrière droite. Les roues directrices sont montées sur un porte-roue 11 et braquent autour de l'axe 12. Un levier 10 de commande du braquage est monté solidaire du porte-roue 11. Pour simplifier le dessin, on a représenté deux roues directrices, et deux roues équipées de freins, mais il va de soi que toutes les roues peuvent être directrices, que toutes les roues sont bien entendu équipées de freins, et que au moins deux roues sont motrices, voire les quatre.

Chaque roue directrice est braquée par un actionneur électrique 3 relié d'une part à la caisse ou au châssis 33 du véhicule et d'autre part au levier 10, pour commander l'angle de braquage de la roue 1 considérée. Chaque actionneur comporte par exemple un moteur électrique 30 rotatif, un dispositif vis/écrou (non représenté) et une tige coulissante 32, elle-même reliée au levier 10 de commande de braquage. Chaque actionneur comporte encore un capteur 31 de position de la tige 32, indépendant du moteur électrique de l'actionneur. Il permet de mesurer la position exacte de la tige coulissante et, par construction géométrique, de connaître la position angulaire exacte de la roue directrice considérée.

On voit aussi un volant 2 relié à un dispositif de rappel en ligne droite 20 et relié à un dispositif de mesure de l'angle au volant 21.

Un contrôleur 6 permet de piloter le braquage des roues directrices, en fonction de divers paramètres, dont bien entendu l'angle au volant (ou la position d'un organe équivalent) et la vitesse du véhicule. Le contrôleur 6 est chargé des programmes adéquats pour effectuer à chaque instant le calcul d'un angle de braquage approprié pour chacune des roues directrices, et pilote l'actionneur électrique 3 de chacune des roues directrices.

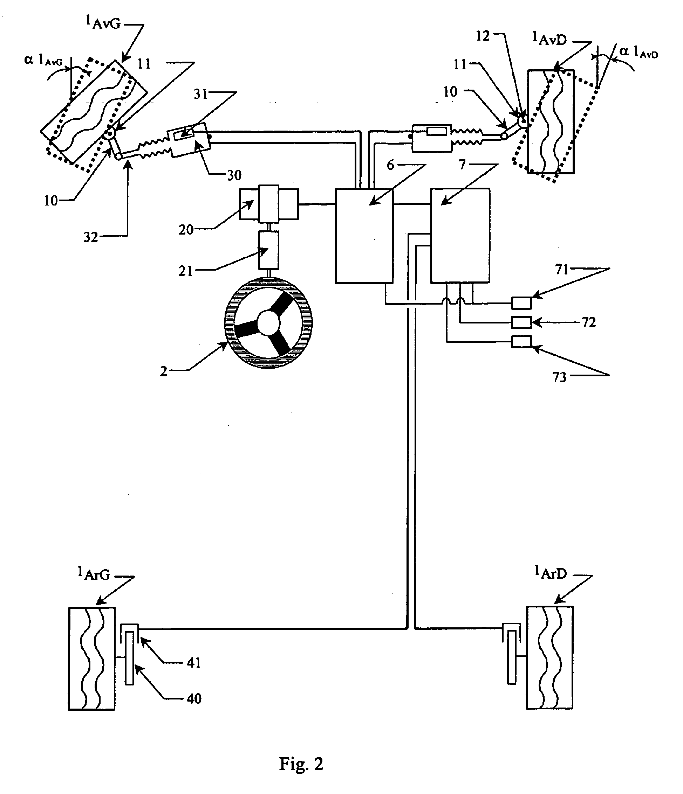

Aux figures 1 et 2, on a aussi représenté (uniquement à l'arrière pour ne pas surcharger les dessins) un disque de frein 40 et une mâchoire de frein 41 associés à chacune des roues. On ne s'intéresse ici aux freins que dans la mesure où ils peuvent intervenir dans le mode dégradé.

Un module 7 de contrôle de la stabilité de trajectoire permet, comme bien connu en soi, de freiner sélectivement et indépendamment une roue quelconque du véhicule. Ce module analyse les signaux venant du contrôleur 6, et venant de capteurs comme un capteur de vitesse 71 du véhicule, un capteur d'accélération transversale 72 et un capteur de lacet 73, cette liste n'étant ni impérative ni exhaustive.

La figure 2 illustre une situation où le véhicule doit tourner à droite alors que l'actionneur de la roue avant droite (roue intérieure au virage) est en panne : il est bloqué en position ligne droite. Le contrôleur calcule pour chacune des roues directrices un angle de braquage normal α 1_{AvG} et α 1_{AvD}. Les positions angulaires qu'auraient les roues si elles respectaient les angles de braquage normaux α 1_{AvG} et α 1_{AvD} sont représentées en traits interrompus. On voit, représentée en traits continus la roue avant droite qui reste en position de ligne droite. Le contrôleur 6 détermine, pour la roue avant gauche, une consigne de braquage de compensation telle que la roue avant gauche est braquée selon ce qui est représenté en traits continus. Dans cette situation, la roue avant gauche va développer une poussée de dérive importante. Cette poussée transversale est orientée vers la droite du véhicule.

Comme dans cette hypothèse la roue avant droite est supposée rester en position ligne droite, cela va s'accompagner d'une poussée de dérive développée par la roue avant droite et orientée de façon antagoniste, c'est-à-dire vers la gauche du véhicule. L'addition algébrique des deux poussées transversales antagonistes va donner une poussée transversale résultante orientée malgré tout vers la droite. L'apparition de cette poussée transversale va provoquer un braquage vers la droite du véhicule.

Dans ce cas de figure, le transfert transversal des charges est d'autant plus important que le véhicule se déplace à une vitesse élevée. Dès lors, la contribution à la poussée transversale globale de l'essieu avant est, de toutes façons, principalement déterminée par la poussée transversale de la roue avant gauche, la roue la plus chargée de l'essieu, qui est extérieure au virage. C'est une situation assez favorable dans laquelle le mode dégradé de fonctionnement permet de maintenir un bon équilibre dynamique du véhicule.

Dans l'hypothèse inverse où l'actionneur électrique en panne correspond à la roue extérieure au virage, compte tenu du transfert de charge qui a été expliqué ci-dessus, la consigne d'angle de compensation pour la roue directrice opposée doit être d'autant plus grande. Cependant, compte tenu du délestage du pneumatique considéré, on va atteindre beaucoup plus vite la saturation de la poussée transversale dont est capable le pneu considéré. Malgré tout, la gestion du mode dégradé proposée par l'invention permet de maintenir le véhicule dans des conditions de sécurité bien meilleures que ce qui résulterait d'une absence de compensation. En outre et de préférence, dans ce cas de figure (panne de l'actionneur de la roue avant du côté extérieur au virage), le système actionne en outre, via le module 7 de contrôle de la stabilité de trajectoire, le frein d'au moins une roue du véhicule du côté du véhicule vers lequel le conducteur souhaite orienter le mouvement lacet, selon son action sur le levier de commande.

Signalons encore qu'il est souhaitable que, de par la conception du véhicule et/ou son réglage, en cas de panne électrique d'un actionneur sans blocage mécanique de celui-ci, la roue directrice puisse braquer de façon assez libre, afin de ne pas risquer de développer des poussées transversales s'opposant aux poussées transversales développées par le roue directrice dont l'actionneur est fonctionnel. A cette fin notamment, l'actionneur électrique est de préférence réversible. En outre, l'épure de suspension est telle qu'un couple à la roue (moteur ou freineur) n'induit que peu ou pas de braquage (par exemple grâce au pivot dans l'axe, ou à un angle de chasse et/ou à un déport faibles ou nuls).

Enfin, signalons que dans le cas où l'on agit sur le couple aux roues, il peut être intéressant d'appliquer un couple moteur à l'une et/ou l'autre des roues extérieures au virage, ne fut-ce que transitoirement. Enfin, en cas de dysfonctionnement d'un actionneur de roue, il convient de préférence de provoquer un ralentissement global du véhicule et d'en limiter la vitesse.

Dans un exemple particulier, la valeur de la consigne de braquage de compensation dépend de l'écart, en amplitude et en signe, entre l'angle de braquage normal calculé et l'angle de braquage mesuré sur la roue directrice dont l'actionneur est en panne.

Dans un autre exemple particulier, la consigne de braquage de compensation dépend de la localisation de la roue dont l'actionneur est en panne, la localisation étant soit du côté gauche du véhicule soit du côté droit du véhicule, par rapport au mouvement de lacet du véhicule orienté soit vers la gauche soit vers la droite.

Dans un autre exemple particulier, en mode de fonctionnement dégradé activé sur panne d'un seul actionneur de roue d'un essieu donné, il existe en outre une consigne de freinage d'au moins une roue du véhicule du côté du véhicule vers lequel le conducteur souhaite orienter le véhicule, selon son action sur le levier de commande.

Dans un autre exemple particulier, en cas de panne de l'actionneur de la roue avant du côté intérieur du virage, la consigne de braquage de compensation est un angle de braquage valant une fraction de même signe de l'angle de braquage normal calculé pour la roue directrice dont l'actionneur n'est pas en panne.

Dans un autre exemple particulier, en cas de panne de l'actionneur de la roue avant du côté extérieur du virage, la consigne de braquage de compensation est un angle de braquage valant sensiblement l'angle de braquage normal calculé pour la roue directrice dont l'actionneur n'est pas en panne, le système actionnant en outre le frein d'au moins une roue du véhicule du côté du véhicule vers lequel le conducteur souhaite orienter le véhicule, selon son action sur le levier de commande.

## Revendications

1. Système de direction d'un véhicule dont toutes les roues directrices sont commandées en braquage par un actionneur (3) qui lui est propre, le système comportant au moins un levier de commande de direction (2) à la disposition du conducteur pour agir sur la trajectoire du véhicule, chaque roue directrice étant pourvue de moyens de mesure (31) permettant d'estimer l'angle de braquage de ladite roue directrice, le système comportant :
• un contrôleur (6) ayant au moins un mode de fonctionnement normal dans lequel le contrôleur détermine, pour chaque roue directrice, une consigne d'angle de braquage normal au moins en fonction de l'action du conducteur sur son levier de commande et ayant au moins un mode de fonctionnement dégradé activé en cas de panne d'un actionneur de roue ;
• des moyens de détection de panne d'un actionneur de roue activant ledit mode de fonctionnement dégradé et transmettant au contrôleur la localisation sur le véhicule de la roue dont l'actionneur est en panne ;
**caractérisé en ce que**, en mode de fonctionnement dégradé activé sur panne d'un actionneur de roue donné, le contrôleur détermine au moins une consigne braquage de compensation pour une autre roue directrice.

2. Système de direction selon la revendication 1 dans lequel la consigne de braquage de compensation concerne la roue directrice opposée sur l'essieu ayant une roue directrice en panne.

3. Système de direction selon la revendication 1 ou 2 dans lequel la valeur de la consigne de braquage de compensation dépend de l'écart, en amplitude et en signe, entre l'angle de braquage normal calculé et l'angle de braquage mesuré sur la roue directrice dont l'actionneur est en panne.

4. Système de direction selon l'une des revendications 1 à 3 dans lequel la consigne de braquage de compensation dépend de la localisation de la roue dont l'actionneur est en panne, la localisation étant soit du côté gauche du véhicule soit du côté droit du véhicule, par rapport au mouvement de lacet du véhicule orienté soit vers la gauche soit vers la droite.

5. Système de direction selon l'une des revendications 1 à 4 dans lequel, en mode de fonctionnement dégradé activé sur panne d'un seul actionneur de roue d'un essieu donné, le contrôleur détermine en outre une consigne de freinage de compensation d'au moins une roue du véhicule du côté du véhicule vers lequel le conducteur souhaite orienter le véhicule, selon son action sur le levier de commande de direction.

6. Système de direction selon l'une des revendications 1 à 5 dans lequel, en cas de panne de l'actionneur de la roue avant du côté intérieur du virage, la consigne de braquage de compensation est un angle de braquage valant une fraction de même signe de l'angle de braquage normal calculé pour la roue directrice dont l'actionneur n'est pas en panne.

7. Système de direction selon l'une des revendications 1 à 5 dans lequel, en cas de panne de l'actionneur de la roue avant du côté extérieur du virage, la consigne de braquage de compensation est un angle de braquage valant sensiblement l'angle de braquage normal calculé pour la roue directrice dont l'actionneur n'est pas en panne, le système actionnant en outre le frein d'au moins une roue du véhicule du côté du véhicule vers lequel le conducteur souhaite orienter le véhicule, selon son action sur le levier de commande.

8. Système de direction selon l'une quelconque des revendications précédentes, dans lequel les actionneurs de roue sont électriques.

## Claims

1. A system for steering a vehicle whereof steering of all the steerable wheels is controlled by an actuator (3) specific thereto, the system having at least one lever for controlling the steering (2) available to the driver in order to affect the trajectory of the vehicle, each steerable wheel being provided with measuring means (31) allowing the steering angle of the said steerable wheel to be estimated, the system having:
• a controller (6) which has at least a normal mode of operation in which, for each steerable wheel, the controller determines a set point for the normal steering angle at least as a function of the driver's operation of his or her control lever and having at least a degraded mode activated in the event of failure of a wheel actuator;
• means for detecting the failure of a wheel actuator which activates the said degraded mode and transmits to the controller the location on the vehicle of the wheel whereof the actuator has failed;
**characterised in** the degraded mode activated in the event of failure of a given wheel actuator, the controller determines at least one compensating steering set point for another steerable wheel.

2. A steering system according to Claim 1, in which the compensating steering set point relates to the opposing steerable wheel on the axle having a failed steerable wheel.

3. A steering system according to Claim 1 or 2, in which the value of the compensating steering set point depends on the difference, both as regards size and sign, between the normal steering angle which is calculated and the steering angle measured on the steerable wheel whereof the actuator has failed.

4. A steering system according to one of Claims 1 to 3, in which the compensating steering set point depends on the location of the wheel whereof the actuator has failed, the location being either on the left-hand side of the vehicle or on the right-hand side of the vehicle, in relation to the yaw movement of the vehicle oriented either to the left or to the right.

5. A steering system according to one of Claims 1 to 4, in which, when the degraded mode is activated on failure of a single wheel actuator of a given axle, the controller determines in addition one compensating braking set point of at least one wheel of the vehicle on the side of the vehicle towards which the driver wants to orient the vehicle in accordance with his or her operation of the steering control lever.

6. A steering system according to one of Claims 1 to 5, in which, when the actuator of the front wheel on the inside as the vehicle turns fails, the compensating steering set point is a steering angle which corresponds to a same-sign fraction of the normal steering angle calculated for the steerable wheel whereof the actuator has not failed.

7. A steering system according to one of Claims 1 to 5, in which, when the actuator of the front wheel on the outside as the vehicle turns fails, the compensating steering set point is a steering angle which corresponds substantially to the normal steering angle calculated for the steerable wheel whereof the actuator has not failed, with the system moreover actuating the brake of at least one wheel of the vehicle on the side of the vehicle towards which the driver wants to orient the vehicle in accordance with his or her operation of the control lever.

8. A steering system according to any one of the preceding claims, in which the wheel actuators are electrical.

## Patentansprüche

1. Fahrzeug-Lenksystem, bei dem der Lenkeinschlag aller gelenkten Räder von einem ihm eigenen Stellglied (3) gesteuert wird, wobei das Systems mindestens einen Lenksteuerungshebel (2) aufweist, der dem Fahrer zur Verfügung steht, um auf die Spur des Fahrzeugs einzuwirken, wobei jedes gelenkte Rad mit Messmitteln (31) versehen ist, die es ermöglichen den Lenkwinkel des gelenkten Rads zu schätzen, wobei das System aufweist:
• ein Steuergerät (6) mit mindestens einem normalen Betriebsmodus, in dem das Steuergerät für jedes gelenkte Rad einen Sollwert des normalen Lenkwinkels zumindest in Abhängigkeit von der Einwirkung des Fahrers auf seinen Steuerhebel bestimmt, und mit mindestens einem Notbetriebmodus, der bei einem Ausfall eines Rad-Stellglieds aktiviert wird;
• Mittel zur Erfassung des Ausfalls eines Rad-Stellglieds, die den Notbetriebmodus aktivieren und die Lokalisierung desjenigen Rads am Fahrzeug an das Steuergerät übertragen, dessen Stellglied ausgefallen ist;
**dadurch gekennzeichnet, dass** im Notbetriebmodus, der bei einem Ausfall eines gegebenen Rad-Stellglieds aktiviert wird, das Steuergerät mindestens einen Sollwert des Ausgleichslenkeinschlags für ein anderes gelenktes Rad bestimmt.

2. Lenksystem nach Anspruch 1, bei dem der Sollwert des Ausgleichslenkeinschlags das gegenüber liegende gelenkte Rad auf der Achse betrifft, die ein ausgefallenes gelenktes Rad hat.

3. Lenksystem nach Anspruch 1 oder 2, bei dem die Größe des Sollwerts des Ausgleichslenkeinschlags von der Abweichung in Amplitude und Vorzeichen zwischen dem berechneten normalen Lenkwinkel und dem an dem gelenkten Rad gemessenen Lenkwinkel abhängt, dessen Stellglied ausgefallen ist.

4. Lenksystem nach einem der Ansprüche 1 bis 3, bei dem der Sollwert des Ausgleichslenkeinschlags von der Lokalisierung des Rads abhängt, dessen Stellglied ausgefallen ist, wobei die Lokalisierung entweder auf der linken Seite oder auf der rechten Seite des Fahrzeugs bezüglich der Gierbewegung des Fahrzeugs ist, die entweder nach links oder nach rechts ausgerichtet ist.

5. Lenksystem nach einem der Ansprüche 1 bis 4, bei dem im Notbetriebsmodus, der beim Ausfall eines einzigen Rad-Stellglieds einer gegebenen Achse aktiviert wird, das Steuergerät außerdem einen Ausgleichsbremssollwert mindestens eines Rads des Fahrzeugs auf der Seite des Fahrzeugs bestimmt, zu der der Fahrer das Fahrzeug gemäß seiner Einwirkung auf den Lenksteuerungshebel ausrichten möchte.

6. Lenksystem nach einem der Ansprüche 1 bis 5, bei dem bei Ausfall des Stellglieds des Vorderrads auf der Innenseite der Kurve der Sollwert des Ausgleichslenkeinschlags ein Lenkwinkel ist, der einem Bruchteils mit gleichem Vorzeichen des normalen Lenkwinkels entspricht, der für das gelenkte Rad berechnet wird, dessen Stellglied nicht ausgefallen ist.

7. Lenksystem nach einem der Ansprüche 1 bis 5, bei dem bei Ausfall des Stellglieds des Vorderrads auf der Außenseite der Kurve der Sollwert des Ausgleichslenkeinschlags ein Lenkwinkel ist, der im Wesentlichen dem normalen Lenkwinkel entspricht, der für das gelenkte Rad berechnet wird, dessen Stellglied nicht ausgefallen ist, wobei das System außerdem die Bremse mindestens eines Rads des Fahrzeugs auf der Seite des Fahrzeugs betätigt, zu der der Fahrer das Fahrzeug gemäß seiner Einwirkung auf den Steuerhebel ausrichten möchte.

8. Lenksystem nach einem der vorhergehenden Ansprüche, bei dem die Rad-Stellglieder elektrisch sind.
